Europäisches Patentamt

European Patent Office  (11) Publication number: **0 085 142**

Office européen des brevets  **A2**

(19)

(12) **EUROPEAN PATENT APPLICATION**

(21) Application number: **82109986.8**  (51) Int. Cl.³: **G 01 D 9/38**

(22) Date of filing: **28.10.82**

(30) Priority: **26.01.82 ES 509082**

(43) Date of publication of application:
**10.08.83 Bulletin 83/32**

(84) Designated Contracting States:
**AT BE CH DE FR GB IT LI LU NL SE**

(71) Applicant: **INVESTRONICA S.A.**
**Tomás Breton, 21**
**Madrid-7(ES)**

(72) Inventor: **Perez, Bernardo Alcantara**
**C/ Rioja No 13 4 B**
**Madrid(ES)**

(74) Representative: **Patentanwälte Henkel, Pfenning,**
**Feiler, Hänzel & Meinig**
**Möhlstrasse 37**
**D-8000 München 80(DE)**

(54) **Automatic device for drawing articles.**

(57) An automatic device of numerical control for drawing articles at a high velocity and in an exact form, having a drawing means and paper, wherein the drawings are produced by the combination of two particular movements, one of said movements is effected by the paper (movement along the X axis) and the other movement is realised by the drawing means (movement along the Y axis), having a roll for feeding the paper and another roll for collecting the paper through digitally controlled paper undulations.

EP 0 085 142 A2

./...

Croydon Printing Company Ltd.

**Fig. 1**

## Automatic Device for Drawing Articles

This invention relates to an automatic device of numerical control for drawing in an exact manner and at high velocity one or more articles. Such procedure is accomplished by conveying the information of the specific configuration of the article to be designed to the automatic device by means of a data arranger received from punched tapes or any other typical data inputs for a computer in accordance to the construction of the intelligent device.

Although different devices for drawing are known, the present invention has several advantages derived from the general characteristics making it extremely advantageous in relation to similar devices already known. The most remarkable advantages over the conventional devices are that a maximum usable width can be obtained, that the device has a compact structure and a great load capacity, it offers an operation at high velocity and acceleration with a high degree of precision and resolution.

The automatic device basically consists in a system for transporting the paper by means of a servo-motor which controls and provides the movement in a direction herein described as direction X. A carriage with instruments glides on a guide in a direction perpendicular to the movement of the paper, that is in a Y direction. For holding and collecting the paper there is provided a system having a vessel with vacuum and a series of actuating motors and photo-optical control barriers as well as panels and different control means. All the foregoing cited means are mounted on a movable supporting structure provided with wheels.

With the automatic device it is possible to draw on a solid support such as paper any form inherent to one or more articles from the information inherent to the intrinsic configuration of said articles to be designed.

An embodiment of the present invention is described more fully in light of the accompanying drawings. In the drawings:

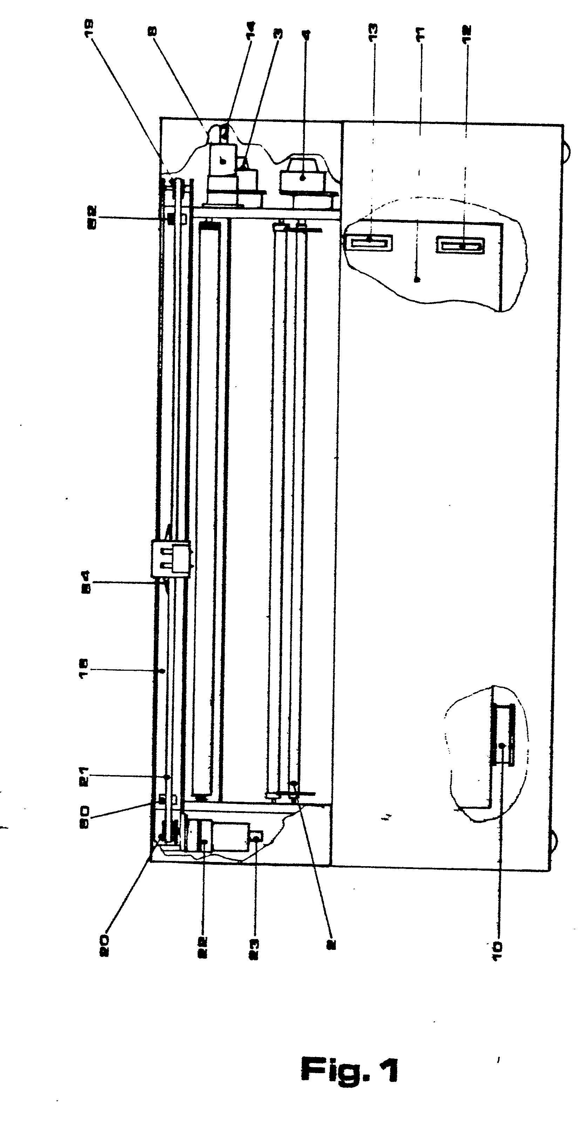

Fig. 1    is a schematic side view of the invention,

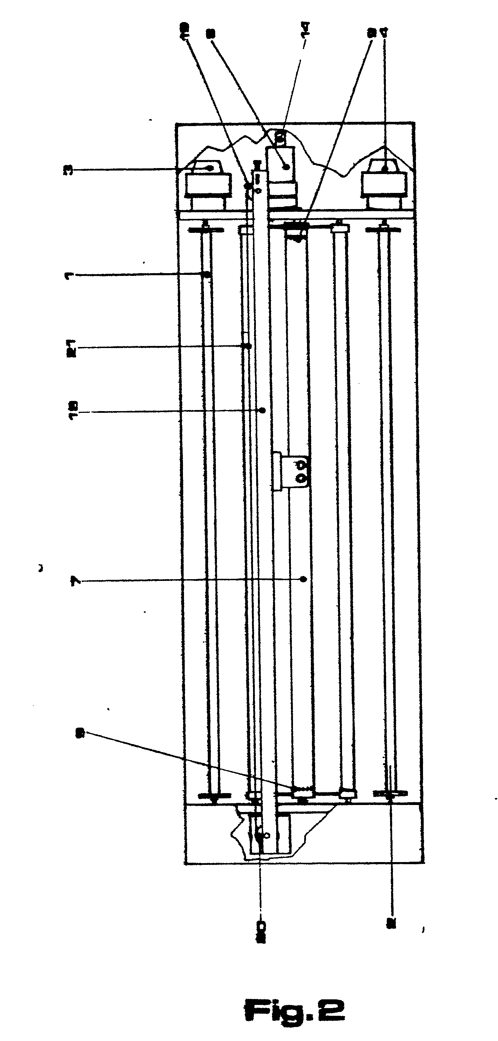

Fig. 2    is a schematic top view,

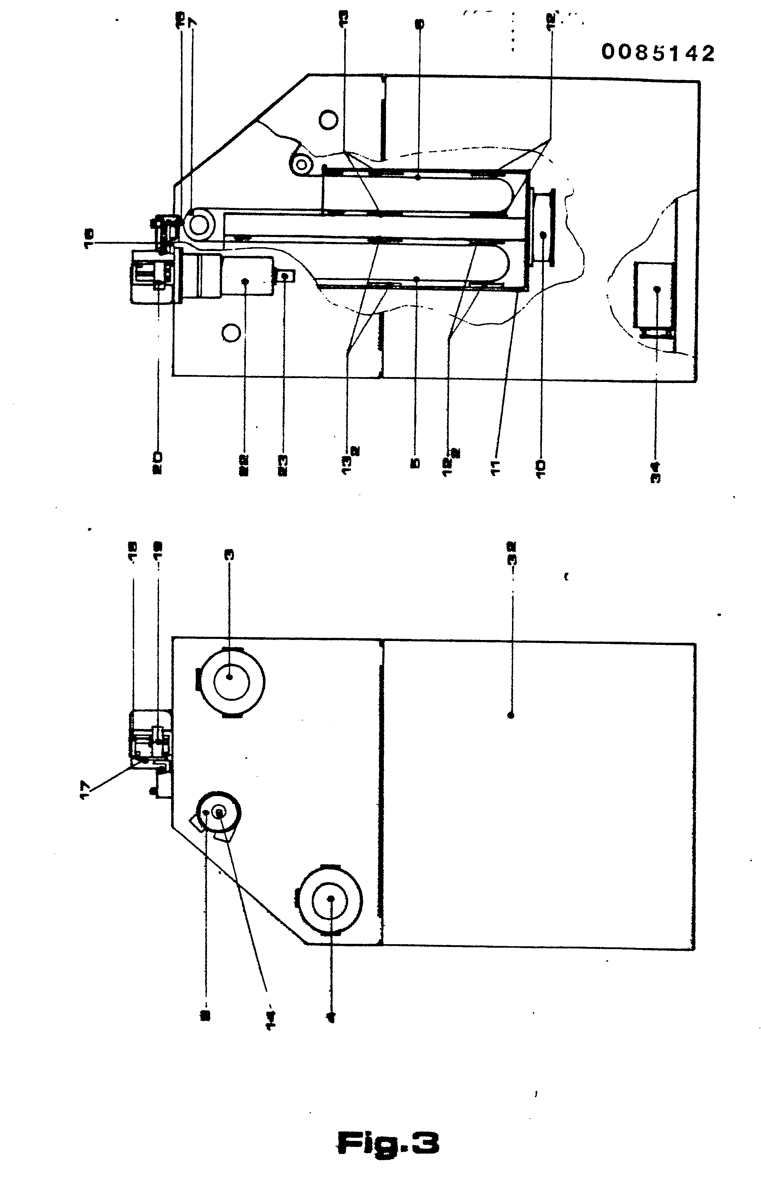

Fig. 3    shows schematic side views, showing in part the internal structure,

Fig. 4    is a schematic view of the mechanism for transporting the paper for the drawings,

Fig. 5    is a schematic view of the mechanism for affecting the movement in the X direction,

Fig. 6    is a schematic view of the mechanism moving the carriage in the Y direction, and a detail of the structure thereof corresponding to the mechanism for supporting the drawing instrument or ball-point pen,

Fig. 7    is a schematic view of  the mechanism actuating the ball-point pen,

Fig. 8    is a generic electronic block-diagram for the control of the device and

Fig. 9    is a detailed block-diagram of the electronic sub-system.

According to  the drawings, the automatic device of numerical control for drawing at high velocity and in exact form comprises rolls for feeding paper 1 on which the drawing is to be made, and which are in the following called "paper", a  roll 2 for  collecting the paper, and a group of motors 3 and 4 for actuating the rolls 1 and 2. These groups of assemblies hold two undulated stripes of paper 5 and 6, each on one side of a motor roll 7, which is actuated by means of a motor 8 through a reduction gear.

The roll 7 moves the paper in accordance with details described hereinafter and keeps the paper undulations between the positions 12 and 13 of the motor reducers 3 and 4 controlled by respective signal emitters situated in 12 and 13 and by a ventilator 10 arranged at the bottom of a vessel 11. The device is provided with a rail 18, having a U-shaped cross-section on which a carriage 17 is movably mounted. The carriage 17 has a support 16 and a drawing instrument 15.

The carriage 17 is moved by means of a servo-motor 22 which drives a driving wheel 20 through a reduction provided for said effect. The driving wheel 20 moves a transmission belt 21 which is held in tension by means of a second driving wheel 19.

At the lower part of the support structure 32 is arranged an assembly 34, including in it the whole control electronics for the device. The electronic sub-system receives the information from outside, processes and transmits the corresponding datas to the mechanical sub-system for actuating the mechanical sub-system and controls the perfect functioning of the device. The electronical sub-system which is arranged in the assembly 34 comprises the following differenciated means:

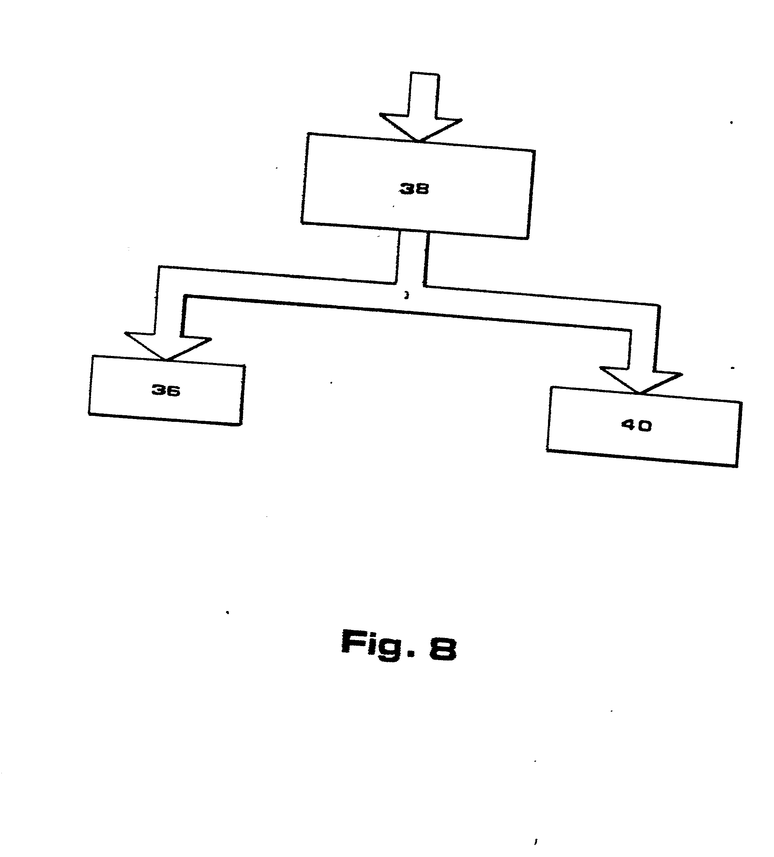

a) A position error generator with servo-amplifiers and power unit for the motors corresponding to the X and Y axis shown in Fig. 8 within the block 36.

b) The control logic necessary for the connection with the external world and for the generation of the necessary orders for the tracing of lines. This block is indicated in Fig. 8 with the numeral 38.

c)   Sensors, servo-amplifiers and power units for the
     paper rolls. Reference 40.

With respect to these differentiated parts, it is pointed
out that the position error generator is composed of two
electronic cards:

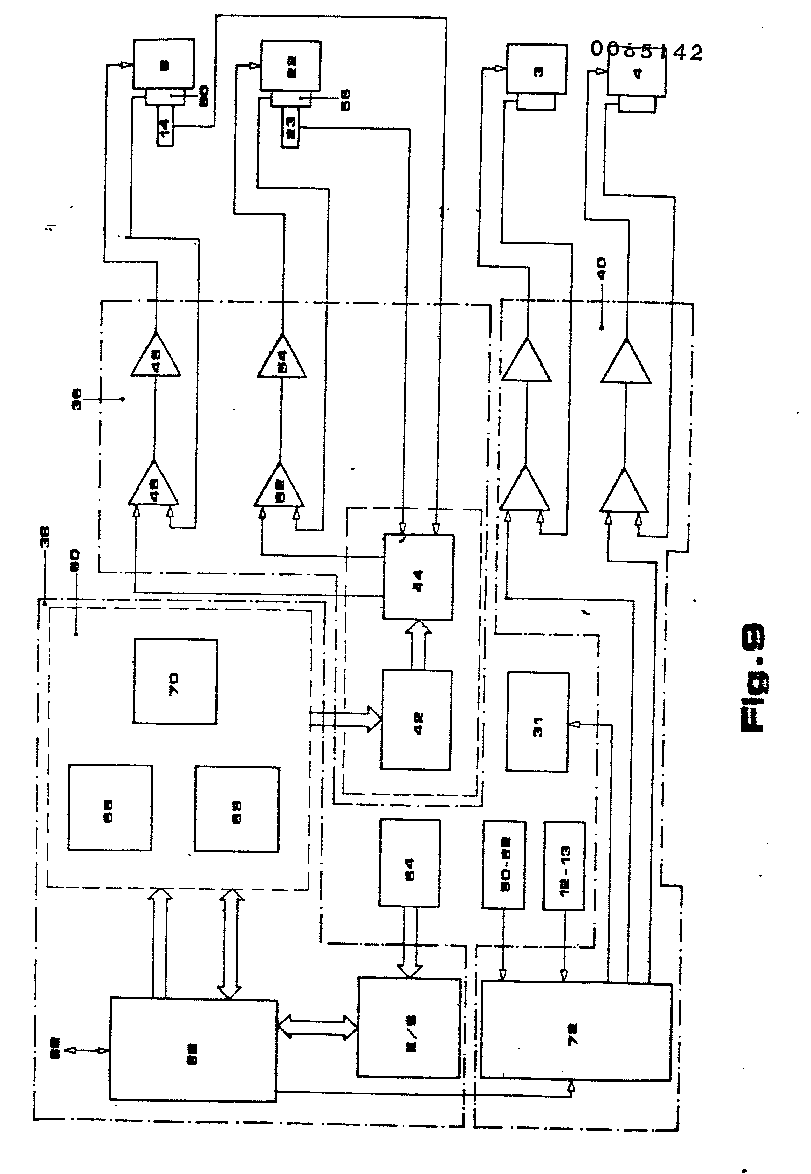

A logic 42 (Fig. 9) corresponding to X-Y, and a resolver
44.

The resolver card compares the phase of two waves, one of
which comes from the logic X-Y and the other one is generated by the resolver itself, which is coupled to the motors. When the phases of these two waves are not equal,
an error signal is generated obliging the motors to move
until the phases are equalized.

The logic X-Y generates a reference signal. The phase of
this wave can be varied by applying pulses to the input of
this card. It is also possible to control the sign of
variation of the phase. Consequently, each pulse at the
input of the logic X-Y is equivalent to a displacement
in the corresponding motor, that is X or Y.

Also the direction of displacement is controlled at the
input of this card.

The servo-amplifier 46 brings the error signal of  the
resolver card in conformity in order to control the power
block 48. This servo-amplifier is provided with variable
gane and damping for proper adjusting of  the servo-
amplifier. It comprises also a tacometric feedback 50
for the stabilisation of the system.

The power unit provides the necessary potential and current for actuating the motors. It comprises a control for the peak intensity. By adjusting these controls at the permitted maximum for the motors a destruction of the motors will be avoided, if, for any reason, the process is forced above its possibilities.

The control logic b) comprises two parts: a microprocessor 58 and a line generator 60. The microprocessor establishes the connection with the external world and feeds the line generator 60 with the necessary data. In order to permit the communication with the exterior a line of input/output (E/S) series is provided. This line indicated with the reference 62 is constructed according to the norm RS-232 and is used for the communication with an arranger for receiving the orders. Further parallel E/S units are provided for controlling keys 64 and a drive or ramp generator 66 as well as for actuating electromagnets 31 which are used for moving the pencils 15. Some electroluminescence diods are provided for indicating whether there are any types of errors or not.

The line generator 60 has the function of calculating in which instant the pulses for drawing the required line is to be provided to the logic X-Y 42. The algoritmo produced by said line generator 60 could have been implemented by software, but nowadays there exists no microprocessor on the market which is sufficiently fast for calculating the pulses with the velocity and acceleration required for moving the motor provided for the processing of this device.

The line generator 60 comprises two parts: one is the generator per se comprising a sequencer 68 and an arithmetic logic unit (ALU) and the other part consists

in an acceleration drive generator 66. The first part
has two registers of 16 bytes each. These registers
are charged by the microprocessor indicating the
increases of X and Y corresponding to a line to be
traced.

The drive generator 66 basically actuates upon the
frequency of the watch of the system which controls
the sequencer 68 and the ALU 70. At the beginning of
the movement, the frequence of the watch is low and
then it raises until a maximum. At the end of the movement the operation is reversed by slowing down the
frequency of the watch. The generator has two registers;
one of them indicates the number of pulses which are
to be transmitted when accelerating, and the other
having a number of pulses which are necessary to provide
at a constant speed. The microprocessor 58 charges the
registers. For the charge of the four described registers
some intermediate buffers were introduced which can be
written by the microprocessor in any instance although
the generator is in that moment tracing a line, and
without interfering its behaviour. These buffers do not only
avoid putting the microcomputer and the generator in a total
asychronous situation, they also avoid a time loss
which could arise when finishing the tracing of a line
by the charge of said registers.

The amplifiers and the power stages for the paper rolls
40 are exactly the same as those described for the X and Y
axis.

Sensor cards 72 are provided emitting error signals
and receiving signals from the sensors 12 and 13. These
sensors are arranged at the undulation of the paper
and they provide the information whether there is too much or too little paper in the corresponding undulation. The signal generated by these sensors are brought in conformity with the sensors card 72 for controlling the corresponding servo-amplifier.

Depending on whether there is too much or too little paper the error signals will be positive or negative, inducing the motors to drive in one or the other direction. Further, there exists a detector for indicating the end of the road for the Y axis, 80 and 82. When the support for the pencil reaches the end of the road the sensor card will generate an impulse which is added to the error of the servo-amplifier of the Y axis in order to avoid that the support gets rid of the rail. The sign of the impuls is contrary to the sign of the movement. The operation of a device as described is as follows. The roll 7 on whose surface the operation of drawing is to be done moves the paper forwards and backwards through pivots 9 and / consequently raising and lowering the undulations of the paper 5 and 6. The paper which is perforated at both sides keeps stuck at the surface of the roll 7 during the movement operation by action of the vacuum produced by the ventilator 10. This movement is accomplished by the tachometer motor group 8 with which a position detector 14 is coupled. This group together with a part of the electronics described herebelow constitutes a / servo-position system which effects and controls the displacement in the direction of the X asis. The movement in the X direction also can be obtained by the deposition of stripes of rough material on the ends of the roll. These stripes are composed of small grains of a hard material having sharp edges and points. Wheels of deformable material being resistent against abrasion lean with a certain pressur against said stripes. The paper is passed between the roll and the wheels and the pressure applied between them causes the paper to be perforated during the process of drawing when passing the first time.

The perforations serve in the following steps as transport elements for a glideless transport, similar to the combination of teeth and perforations described before. The drawing instrument 15 is mounted on a support 16 which itself is mounted on a carriage 17. The carriage 17 is movable along a rail 18, having at its ends a driving wheel 19 and 20 respectively. The driving wheel 19 is loosely rotatable and holds the metal belt 21 in tension. The ends of the belt 21 are attached to each side of the carriage 17. The drive wheel 20 is driven by the tachometer servo-motor 22 and through a reduction gear 27. In the same manner as the servo-motor of the X axis the group 22 also carries a position detector 23. The whole assembly described which moves and positions the drawing element along the generetrics of the cylinder 7 together with one part of the electronics hereinafter described constitutes a position system which actuates and controls the movement in the Y direction. Combining both perpendicular movements (the one of the paper or the X-axis and the one of the drawing element or the Y axis) one can obtain any figure in the plane.

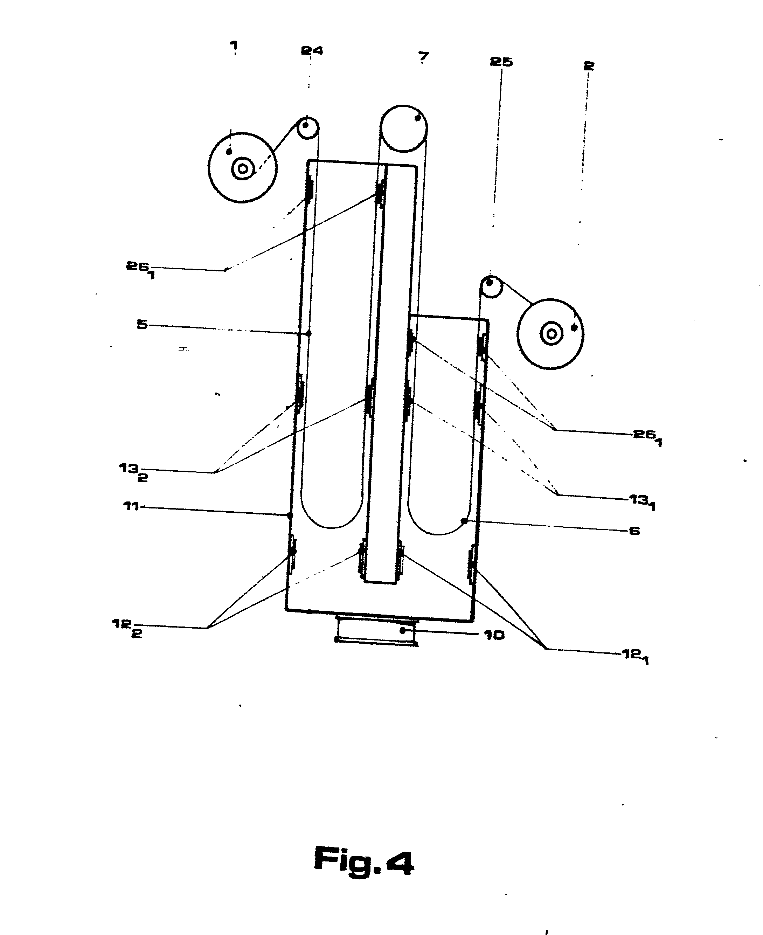

At both ends of the rail 18 are arranged stops 80 and 82 which are actuated by means of a lever 84 incorporated in the carriage 17. The undulation of the paper can be seen in Fig. 4. During operation of the device the ventilator 10 is actuated and the undulations 5 and 6 of the paper are held in tension downwards, as shown in the figure on account of the air stream in said direction, and holding therewith the paper in firm contact with the drawing roll 7 and the loosely rotatable rolls 24 and 25. Each paper undulation acts in forms completely independent of the other. In the following the way of operation of one of them will be described. A paper ondulation moves always between a lower sensor 12 and an upper sensor 13 in such a way that in normal operation the sensors 12 are uncovered and the sensors 13 are covered. Always when this happens the corresponding roll is stopped / and when the contrary happens then the corresponding roll will drive in a sense to release or to collect the paper in order to reestablish the correct situation. Supposing that during a drawing process the roll 7 is rotating in a clockwise direction and considering the rolls 1 and 2 stopped, the ondulation 5 will be raised and the ondulation 6 will decrease. When the ondulation 5 intends to decover the sensors $13_2$ the sensor will emit a signal to the motor 3 for actuating the roll 1 in counter-clockwise direction, releasing the paper so that it intends to keep the sensors $13_2$ covered. Supposing that the roll 7 turns in the counter-clockwise direction, the ondulation 5 will descend and when it intends to cover the sensor $12_2$ these will emit a signal to motors 3 actuating the roll 1 in clockwise direction recollecting the paper.

The sensors $12_1$ and $13_1$ control in a similar manner the motor 4 and the roll 2 such that if the movement of the roll 7 is sufficiently continuous in one direction it will be necessary to provide paper to one ondulation and to recover from the other one simultaneously through the control by the corresponding sensors. There are also security sensors $26_1$ and $26_2$ at each ondulation which must be covered continuously. At the bottom of the vessel 11 is arranged a vacuum detector 27 which stops the operation of the device in case the ventilator 10 is stopped.

The optical barriers could also be another system as contacts effectuated by levers following the movement of the paper undulation or pressure detectors which detect the difference in the pressure at the upper and the lower part of the vessel 11.

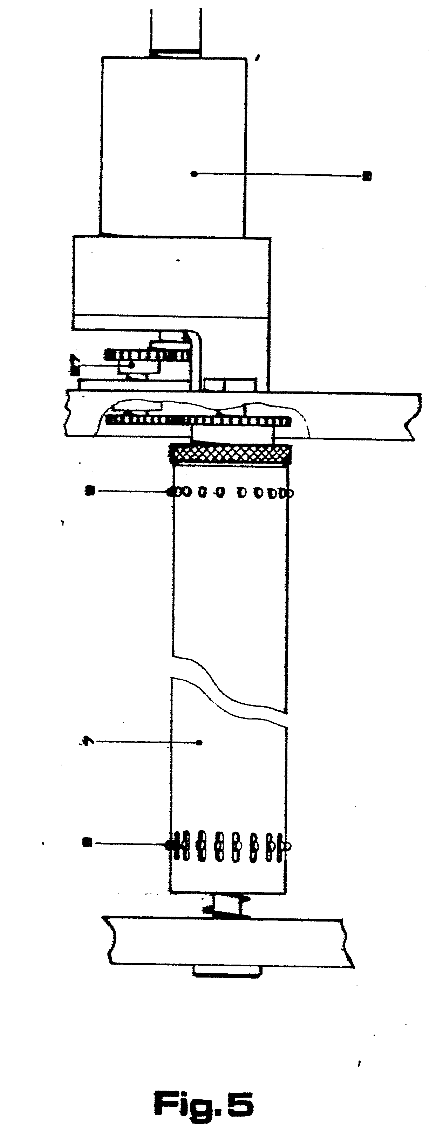

In Fig. 5 is shown in more detail the movement assembly of the X axis comprising the motor 8, an intermediate axis 27 and a roll 7 together with transport teeth 9 having the possibility of lateral movement.

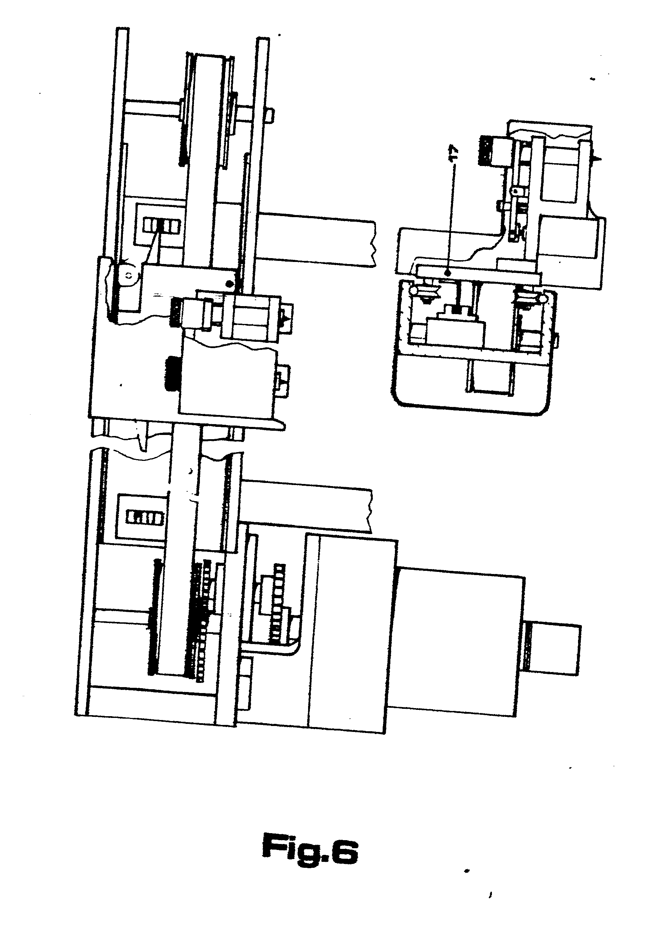

Figure 6 shows with more detail the movement assembly of the Y axis comprising the motor 22, the intermediate axis and the driving wheel 20 as well as the rail 18 on which the carriage and the drive wheel 19 are movably arranged.

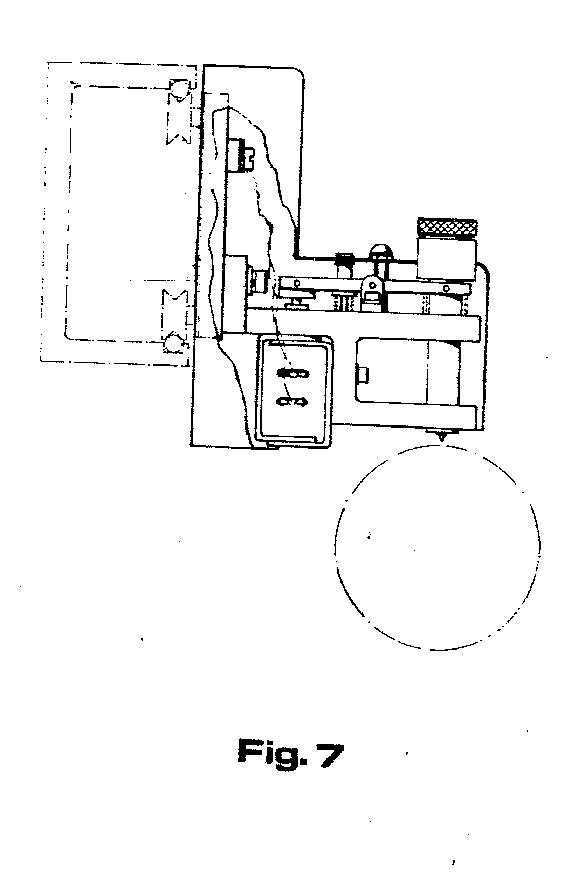

Figure 7 shows the fitting of the ball-point pen 15 in the support 16. The ball-point pen is fixed on a support 29 guided by the support 16 and arranged on one end of a lever 30. The other end is actuated by means of an electromagnet 31. On the carriage 17 can be arranged many supports 16 in order that it is possible to hold several ball-point pens of different colors.

The microprocessor 58 is in any time ready to receive an order through the line E/S, series 62, or through the keys 64 on the parallel lines E/S.
Having received the order,
the microprocessor 58 decodes the signal and calculates the necessary data for the registers X and Y and the registers for the acceleration of the line generator 60.

Once these datas are calculated the microprocessor 58 feeds them into the buffers of the watch and of the drive

generator 66 and into /the ALU 70. When these are charged, the microprocessor 58 gives the starting order to the line generator 60. From here the microprocessor 58 remains totally free for the calculation of the data correspoding to the following segment or for detecting any signals through the line E/S, series 62, or the keys 64.

The line generator 60 when receiving the starting signal starts to emit the pulses for the movement of the X and Y axis and the logic X-Y 42. When the line generator 60 finishes the tracing of a line this is indicated to the microprocessor 58 through a control line (end) so that the line generator 60 can receive another starting order.

If the logic X-Y 42 does not receive pulses X-Y, then it generates a wave for each axis of constant phase. When it receives a pulse it changes the phase of the wave of the corresponding axis.

The resolver 44 compares continuously the phase of the waves coming from the logic X-Y 42 and from the resolver 14 and 23 coupled to the motors 8 and 22 respectively. When the signals are in phase the error signal is 0 and the motors will/move not. When there are differences in the phase then the error signal will take a certain value. The error signal is treated by the branch servo-amplifier-power of the corresponding axis (branch 46-48 for the X axis or 52-54 for the Y axis). The motor 8 or 22 will move until the signal generated by the resolver 14 or 23 is in phase with the wave of the logic X-Y 42.

The microprocessor 58 also controls the activation of the electromagnets of the pencils 31.

The sensors of the undulations of paper 12 or 13 detect whether in an undulation is too much or too little paper, the signal activates the sensors and the pencil 72 for activating the servo-amplifier-power branch of the corresponding motor 3 or 4. When the assembly support reaches one end 80 or 82 of the rail the sensors and pencils 72 will emit an impulse which oblige the motor 22 to stop and to stop the support.

In this way a drawing device is established which offers an operation of high precision improving in this way the conventional techniques in this field. This invention has been shown and described in preferred form only, and by way of example, and many variations based on the fundamental principals of the idea may be made in the invention which will still be comprised within its spirit.

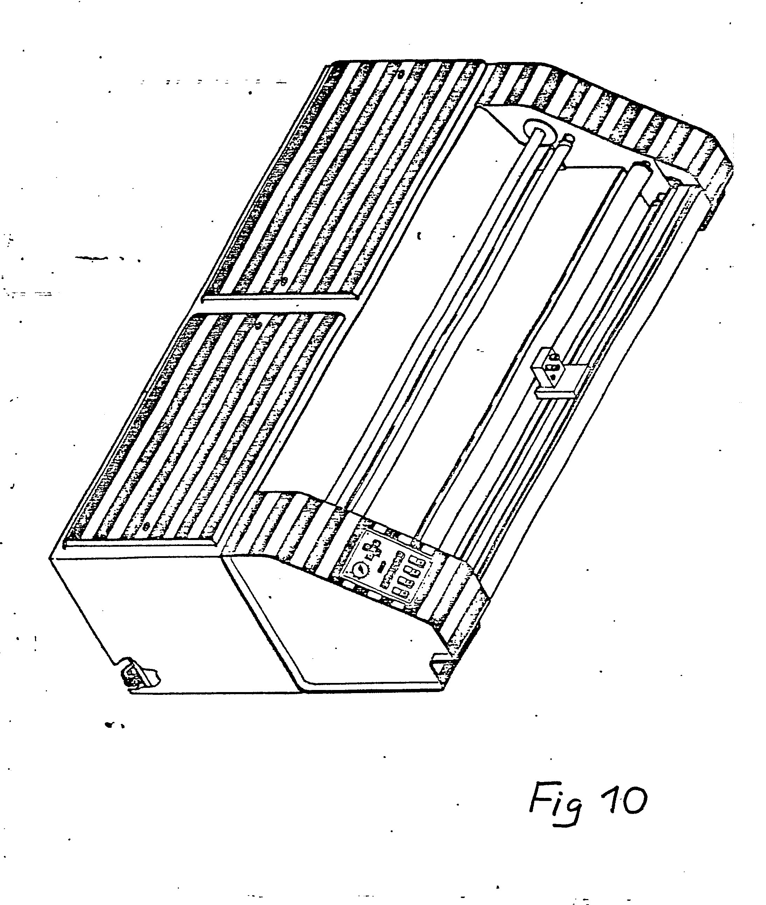

Figur 10 shows a perspective view of a preferred embodiment of a device according to the invention.

EPA 82 109 986.8
Investronica S.A.

**PAGE 1**

Line 10, insert "magnetic tapes" after --punched tapes--.
Line 16, insert "in some especific field of the industry" after --already known--.

**PAGE 3**

Line 4/16, - change "and keeps the paper undulations between the positions 12 and 13 of the motor reducers 3 and 4 controlled by respective  -
signal" to --and the motor reducers 3 and 4 keeps
the paper undulations between the positions 12
and 13, controlled by respective signal--.

**PAGE 4**

Line 31, change "gane" to --gain--.

**PAGE 5**

Line 2, change "potential" to --voltage--.
Line 16, change "an arranger" to --a computer--.
Line 18, change "keys 64 and a drive" to --keyboard
64 and an acceleration drive--.
Line 20/21, change "electroluminiscence" to --light
emitting diods--.

../...

PAGE 6
--------

Line 10, change "watch" to --clock--.

Line 12, change "watch" to --clock--.

Line 15, change "watch" to --clock--.

Line 25, change "avoid putting" to --make--,

and insert "work" after --generator--.

PAGE 7
--------

Line 29, change "servoposition system" to --position servosystem--.

PAGE 8
--------

~~Line 15/16, change "tachometer servo-motor" to~~
~~-- servomotor-tachometer--.~~

PAGE 9
--------

Line 14, change "decrease" to --go downwards--.

PAGE 10
--------

Line 30, change "keys" to --keyboard--.

Line 37, change "watch" to --clock--.


IN THE CLAIMS
-------------

PAGE 2
--------

~~Line 6, insert "support" after --rail--.~~
~~Line 30, change "roll of low inertia" to --low~~
~~inertia roll--.~~

PAGE 3
--------

Line 24, change "watch" to --clock--, and insert

--an acceleration-- before "drive".

Line 25, change "watch" to --clock--.

Line 29, change "watch" to --clock--.

## PAGE 4

Line 14, change "power" to --power-stage--.

Line 20, change "transconductor" to --trans-conductance--.

~~Line 23, change "potential" to --voltage--.~~

~~Line 27, change "powers" to --power-stage--.~~

## ABSTRACT

## PAGE 1 ( at the end)

Insert "and having a great storage capacity" after --controlled paper undulations--.

Claims:

1. An automatic device of numerical control for drawing articles at a high velocity and in an exact form, having a drawing means and paper, wherein the drawings are produced by the combination of two particular movements, one of said movements is effected by the paper (movement along the X axis) and the other movement is realised by the drawing means (movement along the Y axis), having a roll for feeding the paper and another roll for collecting the paper through digitally controlled paper undulations.

2. A device as defined in claim 1, wherein the movement along the X axis is realised by a tachometer motor group on which a position detector means called resolver and an intermediate shaft are coupled, said intermediate shaft acting upon a roll of low inertial moment, upon which the paper rests, the ends of said roll are provided with teeth engaging with perforations provided in the drawing paper for transporting the paper without relative movement between the paper and the roll.

3. A device as defined in claim 1 and 2, but wherein the transport of the paper is accomplished by means of stripes of rough material applied on the respective ends of the roll, said stripes comprising small grains of a hard material and having sharp edges and points, wheels of deformable material are provided, said wheels being resistent to ab-rasion, the paper passing through said stripes and said wheels, permitting in this way the movement of the paper without slipping between them.

4. A device as claimed in any of the previous claims, wherein the movement along the Y axis is realised by the drawing means, said drawing means being mounted on an interchangeable support attached to a carriage moveable on rails, fixed on another rail having a cross-section in the form of a U, the carriage is moved by a resolver tachometer servo-motor group similar to the one used for the X axis, said servo-motor group moves a driving wheel through an intermediate shaft (disposed at one end of the U-formed rail), the driving wheel carrying a metallic belt, the ends thereof being attached at both sides of the carriage, the metallic belt is held in tension by means of a loosely rotatable drive wheel arranged at the other end of said U-formed rail.

5. A device as defined in the previous claims, wherein on the carriage are mountable different types of drawing assemblies, consisting in general of a support which guides the assembly support in a direction perpendicular to the axis of the roll of low inertial moment and which receives the movement in said direction from an electromagnet through a lever (the movement being for resting or separating the assemblies on or from the paper).

6. A device as defined in any of the previous claims, wherein the paper forms in front and behind the principle roll of low inertia undulations which are held in said form by vacuum, the height of said undulations may oscillate between two points controlled by means of corresponding signal emitters, said signals controlling the motors for feeding and collecting the paper and having a great storage capacity.

7.  A device as defined in any of the previous claims, wherein an electronical sub-system is provided, the electronical sub-system consisting of a control logic, a position error generator, a servo-amplifier and power for the motors X and Y, sensors, servo-amplifier and power for the paper rolls.

8.  A device as defined in claim 7, wherein the control logic comprises a microprocessor consisting of a microprocessor of 8 bytes, an input/output series unit for a synchronic or asynchronic transmission through a line RS-232, 64 parallel input/output lines compatible with a TTL logic, an EPROM memory of 8 K bytes for the program storage and a static RAM memory of 1 K byte, the control logic further comprising a line generator consisting of an ALU (arithmetic logic unit) capable of realising the sum and the difference of the terms of 16 bytes, indicating the sign of the result, and capable of storing the number of pulses to be given to the X and Y axis and of indicating that the required pulses were emitted, a watch and a drive/generator which varies or ramp the frequence of the watch with time in accordance to the data received from the microprocessor, a sequencer capable of emitting all the signals for the control of the ALU which at the beginning of the stage indicated by the ALU and the watch are received from the drive generator, the sequencer decides in which or Y time a pulse has to be given to the X/axis for the correct tracking of the required line.

9.  A device as defined in claim 7, wherein a position error generator is provided, consisting of a logic X-Y for generating a pair of waves (one for the X axis and the other for the Y axis), with variable phase by means of pulses, each pulse is equivalent to an increase or a decrease in phase, said logic X-Y additionally generates two waves being 90$^{o}$ out of phase, said position error generator comprising also a resolver driver or generator which generates necessary senosoidal waves for controlling the resolver from the two waves being 90$^{o}$ out of phase, the resolver driver also comparing the phase of the variable phase signal generated by the logic X-Y with the signal generated by the resolver coupled to the motors and emitting an error signal when the phases are not coincident.

10. A device as defined in claim 7, wherein comprising a servo-amplifier and a power for the motors X and Y in accordance with claim 7, said servo-amplifier being provided by an input for a tachometric feedback of variable gain and an input for the error signal also of variable gain, the servo-amplifier having also a phase adjustment for adjusting the damping of the system, wherein the power stage being a transconductor amplifier with intensity feedback capable of providing the necessary intensity and potential for the motors, having a control of medium and peak intensity.

11. A device as defined in claim 7, wherein sensors, servo-amplifiers and powers for the paper rolls are provided, the sensors being of an optical type (photosensors), and their signal is employed for moving the motor of the paper rolls with the particularity that the servo-amplifier and the power are of similar characteristics, as indicated in claim 10.

0085142

**Fig. 1**

0085142

Fig.2

0085142

Fig.3

**Fig.4**

0085142

Fig.5

6/10

0085142

**Fig.6**

**Fig. 7**

**Fig. 8**

Fig.9

Fig 10